# EUROPÄISCHE PATENTSCHRIFT

(11) **EP 1 924 747 B1**
(45) Veröffentlichungstag und Bekanntmachung des Hinweises auf die Patenterteilung: **16.12.2009**
(21) Anmeldenummer: 06792968.7
(22) Anmeldetag: 23.08.2006
(51) Int. Cl.: E02B 3/04, C08G 18/00

(54) **VORRICHTUNG ZUM KÜSTENSCHUTZ**
DEVICE FOR PROTECTING A COASTLINE
DISPOSITIF POUR PROTEGER LE LITTORAL

(30) Priorität: 01.09.2005 DE 102005041764
(43) Veröffentlichungstag der Anmeldung: 28.05.2008
(73) Patentinhaber: BASF SE, 67056 Ludwigshafen (DE)
(72) Erfinder: SCHMIDT, Hans Ulrich, 49090 Osnabrück (DE); REESE, Hans-Jürgen, 49401 Damme (DE); LEITNER, Johann, 82140 Olching (DE); ROSER, Joachim, 68161 Mannheim (DE); EISENHARDT, Andrea, 49377 Vechta (DE); PASCHE, Erik, 21075 Hamburg (DE)
(86) Internationale Anmeldenummer: PCT/EP2006/065587
(87) Internationale Veröffentlichungsnummer: WO 2007/025920

(56) Entgegenhaltungen:
- EP-A- 1 375 130
- DE-A1- 1 671 010
- DE-A1- 10 005 537
- JP-A- 2002 047 490

## Beschreibung

Gegenstand der Erfindung ist eine Vorrichtung zum Schutz der Küste von Meeren vor Flutwellen.

Der Schutz von Küsten, insbesondere von Meeresküsten oder den Mündungsbereichen von Flüssen in das Meer, ist in vielen Bereichen notwendig, da durch Sturmfluten oder Tsunamis große Schäden angerichtet werden können.

Da die Mangrovenwälder, die als natürlicher Schutz gegen derartige-Naturereignisse wirken, an vielen Stellen beseitigt wurden, kommt es zu einer Verstärkung der Schäden. Eine flächendeckende Wiederaufforstung der Mangrovenwälder in den betroffenen Regionen ist sehr schwierig und vor allem zeitaufwändig, so dass diese Maßnahme keinen schnellen Schutz bieten kann.

Daher ist ein künstlicher Schutz, zumeist durch Bauwerke, erforderlich.

Zum Schutz vor Sturmfluten oder Tsunamis werden im Küstenbereich oft künstliche Riffs, zumeist aus Betonkörpern, errichtet. Diese wirken als Unterwasser-Wellenbrecher und ragen daher nicht aus dem Wasser heraus. Die künstlichen Riffs werden so bemessen, dass sich die Wellen an den Betonkörpern erst aufstellen und anschließend wie in einem Riff brechen. Dabei ist eine hohe Stabilität und gute Durchströmbarkeit wichtig. Bisherige Konstruktionsweisen erfüllen diese Anforderung nur bedingt, da die lose gestapelten Betonkörper durch die Wellen aus dem Verbund gerissen werden können oder die Wellen nur beugen, ohne sie zu brechen.

Eine weitere Möglichkeit ist der Bau von Molenanlagen In diesem Fall entsteht jedoch neben einer ökologischen auch eine optische Beeinträchtigung der Küstenabschnitte, so dass diese Maßnahme gerade in stark touristisch erschlossenen Gebieten unangebracht ist.

Es ist eine Reihe von Versuchen bekannt, diese Probleme zu lösen. So beschreibt US 4130994 ein künstliches Riff oder schwimmende Wellenbrecher, bei denen eine Reihe schwimmfähiger Scheiben an schwimmfähige flexible Bänder gebunden sind. Diese Bänder werden dann ca. 6 bis 18 Fuß unter der Wasseroberfläche angebracht und sollen so die Erosion entlang der Küstenlinie reduzieren. Diese Möglichkeit ist jedoch technisch sehr aufwendig und weist eine geringe mechanische Stabilität auf.

JP 02308005 beschreibt die Möglichkeit, ein künstliches Harz, beispielsweise Acrylharz, Epoxyharz oder Polyurethan, auf der Oberfläche eines Betonblocks und darauf einen Metallfilm durch Flammkaschierung aufzubringen. Dieser verstärkte Block kann als Wellenbrecher benutzt werden und hat sehr gute Beständigkeiten gegen Seewasser. Diese Lösung ist jedoch technisch ebenfalls aufwendig und bietet, da der Block als kompaktes Bauwerk ausgestaltet ist, nur einen begrenzten Schutz.

JP 2001152153 beschreibt eine Zusammensetzung für Vergusschemikalien auf Basis von Polyurethan zur Stabilisierung des Grundes oder für künstliche Strukturen, deren Anwendung in der Stabilisierung oder Verstärkung von Wasserschutzvorrichtungen liegt. Die Zusammensetzung zeichnet sich durch hohe Festigkeit und Härte aus und hat eine sehr gute Durchlässigkeit für Wasser. Als Mittel für die Hydrophobierung dient Silikat.

JP 2002047490 beschreibt ein Verfahren zur Stabilisierung von Bauwerken für die Befestigung von Küsten. Dabei werden in die Steine Löcher gebohrt und in diese Löcher ein Silikat und ein Polyisocyanat gegeben. Dieses Verfahren ist jedoch aufwendig und nur bei der Verwendung sehr großer Steine praktikabel.

Es war Aufgabe der vorliegenden Erfindung, eine Möglichkeit zum Schutz von Küsten vor Sturmfluten oder Tsunamis zu finden, die einen effektiven Schutz bietet und mit geringem Aufwand praktiziert werden kann.

Die Aufgabe konnte überraschenderweise gelöst werden durch eine Vorrichtung, enthaltend mindestens einen porösen Verbund aus Steinen und Kunststoffen, der fest mit dem Untergrund verbunden und somit an einer Stelle fixiert ist.

Gegenstand der Erfindung ist demzufolge eine Vorrichtung zum Küstenschutz, insbesondere zum Schutz gegen Überflutungen, insbesondere Sturmfluten oder Tsumanis, enthaltend mindestens einen an einer Stelle fixierten porösen Verbund aus Steinen und Kunststoffen.

Der Formkörper besteht aus Steinen, die mit einem Kunststoff miteinander verbunden sind. Bei den Kunststoffen kann es sich beispielsweise um Polyurethane, Epoxyharze, ungesättigte Polyesterharze, Acrylate und Methacrylate handeln. Bevorzugt eingesetzt wird Polyurethan.

Bei den Steinen handelt es sich bevorzugt um Schotter.. Die Steine haben zumeist eine Größe von 1 bis 50 cm, bevorzugt von 1 bis 20 cm, besonders bevorzugt von 2 bis 15 cm, insbesondere von 2,5 bis 6,5 cm.

Die Steine sind durch den Kunststoff nur an ihren Kontaktflächen fest miteinander verbunden. Dadurch ist der Formkörper porös, und das Wasser kann in das Innere des Formkörpers einströmen.

Die Steine sind nur oberflächlich mit dem Kunststoff bedeckt. Die Schicht des Kunststoffs auf den Steinen ist zumeist nur wenige Millimeter, vorzugsweise maximal 5 mm, insbesondere 0,1 bis 5 mm, stark. Dadurch wird nur eine gering Menge an Kunststoff für den Verbundkörper benötigt. Trotzdem ist der Verbund der Steine mit dem Kunststoff so fest, dass er auch einer starken Beanspruchung, wie sie bei Sturmfluten oder Tsunamis auftreten, standhält.

Da das Wasser in die porösen Verbund einströmen kann, wird die Energie, mit der das Wasser auf den Verbundkörper auftrifft, durch das Ausweichen des Wassers in Hohlräume besser absorbiert und führt nicht zur Zerstörung des Formkörpers. Außerdem wird dadurch die Stärke der Wellen stark verringert.

Die Fixierung der Verbunde erfolgt vorzugsweise, indem der poröse Verbund fest mit einem im Boden eingelassenen Bauwerk verbunden wird. Dabei kann es sich um ein im Grund des Meeres befindliches Fundament handeln.

Weiterhin kann es sich bei dem Bauwerk um eine vorzugsweise mit Unterbrechungen versehene, im Grund des Meeres eingelassene Konstruktion handeln.

Das in Meeresboden eingelassene Bauwerk besteht vorzugsweise aus Beton. Möglich ist prinzipiell auch Mauerwerk. Dieses ist jedoch gegenüber Beton weniger stabil und daher nicht bevorzugt. Das Bauwerk kann auch aus verpressten Materialien, beispielsweise Recyclingmaterial, bestehen.

In einer weiteren Ausführungsform kann es sich bei dem Bauwerk auch um eine Metallkonstruktion handeln, in der der Verbund befestigt wird. Diese kann direkt auf dem Meeresgrund befestigt werden. Es ist jedoch auch möglich, diese auf einem Fundament, beispielsweise aus Beton, zu befestigen.

Die Befestigung des Formkörpers auf dem Fundament kann erfolgen, indem der Formkörper auf der Oberfläche des Bauwerks durch ein Befestigungsmittel, beispielsweise durch eine Betonmischung oder durch einen Kleber, beispielsweise einen Kunststoffkleber, der flüssig oder pastös aufgebracht wird und aushärtet, fixiert wird. Alternativ oder zusätzlich zu dieser Befestigung kann auch eine Fixierung des Formkörpers mittels einer Metallkonstruktion erfolgen. Dabei kann es sich beispielsweise um Metallgitter, Metallnetze oder einen Metallkäfig handeln. Das dabei verwendete Metall darf nicht korrosiv sein. Die Fixierung kann auch mittels Spundkästen oder ähnliche Vorrichtungen erfolgen, welche das Bauwerk und den Formkörper zumindest teilweise umfassen.

Zur besseren Fixierung der Formkörper kann sich auf der Oberfläche der Bauwerke eine Vertiefung befinden, die den Formkörper aufnimmt.

Die erfindungsgemäße Vorrichtung zum Schutz der Küste kann vorzugsweise so angebracht werden, dass sie sich vollständig unter der Wasseroberfläche befindet. So kommt es zu keinerlei Beeinträchtigung des Anblicks des entsprechenden Küstenabschnitts. An Küstenabschnitten mit Gezeiten ist es möglich, die erfindungsgemäße Vorrichtung so anzubringen, dass sie sich bei Ebbe oberhalb der Wasseroberfläche befindet.

Die Größe und Form der erfindungsgemäßen Vorrichtung und damit die Kraft, die von dieser Vorrichtung aufgenommen werden muss, hängt von den jeweiligen Strömungsverhältnissen, der Küstenbeschaffenheit sowie von verschiedenen anderen Parametern ab. Solche Vorrichtungen müssten daher immer den vor Ort anfallenden Gegebenheiten individuell angepasst werden.

Die Herstellung der erfindungsgemäßen Vorrichtung kann auf unterschiedlichem Wege erfolgen. Zunächst wird üblicherweise das zur Fixierung erforderliche Fundament in den Boden eingelassen. Dies kann auf üblichem und bekanntem Wege geschehen.

Auf dieses Bauwerk wird der Verbundkörper so aufgebracht, dass er von den Wellen nicht von seinem Platz entfernt werden kann. Dies kann wie oben beschrieben erfolgen.

Die Herstellung der Verbundkörper kann ebenfalls auf unterschiedlichem Wege durchgeführt werden.

In einer Ausführungsform der Herstellung der Verbundkörper können diese als Formkörper hergestellt und nach ihrer Herstellung auf das Fundament aufgebracht werden.

Bei der Herstellung dieser Formkörper wird die Mischung der Steine mit den flüssigen Ausgangskomponenten des Kunststoffs in eine vorzugsweise nach oben offene Form gegeben, wo der Kunststoff aushärtet. Die Formkörper haben vorzugsweise eine solche Größe, dass sie problemlos transportiert und auf das Fundament aufgebracht werden können. von 100 + 50 x 100 + 50 x 15 + 10 cm.

Bei der Herstellung der Formkörper können die Steine in die Form gegeben und auf diese Schüttung die flüssigen Ausgangskomponenten der Kunststoffe aufgebracht werden. Dort benetzen sie die Oberfläche der Steine und härten zum fertigen Kunststoff aus. In einer bevorzugten Ausführungsform der Herstellung werden die Steine mit den flüssigen Ausgangskomponenten der Kunststoffe in einer Mischeinrichtung vermischt und die so benetzten Steine in die Form gegeben, wo sie zum Formkörper aushärten. Die Vorteile dieser Ausführungsform sind zum einen die bessere Vermischung, zum anderen können Formkörper mit einer größeren Dicke hergestellt werden. Die Zeit für die Mischung sollte dabei mindestens so bemessen sein, dass die Steine möglichst vollständig mit der flüssigen Mischung benetzt sind und höchstens so lange, dass der Kunststoff noch nicht ausgehärtet ist. Außerdem können auch solche Steine zu verwendet werden, die an ihrer Oberfläche lose haftende Verunreinigungen aufweisen. Durch die mechanische Beanspruchung beim Mischvorgang werden diese Verunreinigungen von der Oberfläche der Steine entfernt und können somit nicht mehr die Haftung der Steine aneinander beeinträchtigen.

Der so entstandene Verbundkörper kann auf das Fundament aufgebracht und dort wie oben beschrieben fixiert werden.

In einer anderen Ausführungsform der Herstellung der Vorrichtung zum Schutz von Küsten werden die Formkörper direkt an ihrem Einsatzort gefertigt. Dazu werden die Steine mit den flüssigen Ausgangskomponenten der Kunststoffe vermischt und auf das Fundament aufgebracht, wo sie aushärten. Dabei ist es vorteilhaft, die Steine, wie oben beschrieben, mit den flüssigen Ausgangskomponenten der Kunststoffe in einem Mischer zu vermischen und diese Mischung auf das Fundament aufzubringen, wo sie aushärten. Dabei erfolgt gleichzeitig eine feste Verbindung mit dem Fundament.

Als Kunststoffe können die oben beschriebenen Polymere eingesetzt werden. Um eine gute Langzeitstabilität zu erreichen, sollten die Kunststoffe hydrophob ausgerüstet sein.

Bevorzugt eingesetzte Kunststoffe sind Polyurethane und Epoxidharze.

In einer bevorzugten Ausführungsform der Erfindung werden als Kunststoffe insbesondere kompakte Polyurethane eingesetzt.

Zu den bevorzugt verwendeten Polyurethanen ist folgendes zu sagen.

Als Aufbaukomponenten der Polyurethane im Sinne der vorliegenden Erfindung werden ganz allgemein Verbindungen mit freien Isocyanatgruppen und Verbindungen mit Gruppen, die mit Isocyanatgruppen reaktiv sind, verstanden. Gruppen, die mit Isocyanatgruppen reaktiv sind, sind zumeist Hydroxylgruppen oder Aminogruppen. Bevorzugt sind Hydroxylgruppen, da die Aminogruppen sehr reaktiv sind und das Reaktionsgemisch daher rasch verarbeitet werden muss. Die durch Umsetzung dieser Aufbaukomponenten gebildeten Produkte werden im folgenden allgemein als Polyurethane bezeichnet.

Bei beiden Verfahrensvarianten ist es nicht erforderlich, dass die Steine trocken vorliegen. Überraschenderweise gelingt es auch bei Vorliegen von nassen Steinen und sogar unter Wasser, eine gute Haftung zwischen dem Polyurethan und den Steinen zu erhalten.

Als Polyurethane können die üblichen und bekannten Verbindungen dieses Typs eingesetzt werden. Die Herstellung dieser Materialien erfolgt durch Umsetzung von Polyisocyanaten mit Verbindungen mit mindestens zwei aktiven Wasserstoffatomen. Als Polyisocyanate können prinzipiell alle bei Raumtemperatur flüssigen Polyisocyanate, Mischungen und Prepolymere mit mindestens zwei Isocyanatgruppen eingesetzt werden.

Vorzugsweise kommen aromatische Polyisocyanate zum Einsatz, besonders bevorzugt Isomere des Toluylendiisocyanats (TDI) und des Diphenylmethandüsocyanats (MDI), insbesondere Mischungen aus MDI und Polyphenylenpolymethylenpolyisocyanaten (Roh-MDI). Die Polyisocyanate können auch modifiziert sein, beispielsweise durch den Einbau von Isocyanuratgruppen und insbesondere durch den Einbau von Urethangruppen. Die letztgenannten Verbindungen werden durch Umsetzung von Polyisocyanaten mit einem Unterschuss an mit Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 29 Gew.-%.

Als Verbindungen mit mindestens zwei mit Isocyanatgruppen reaktiven Wasserstoffatomen werden zumeist mehrfunktionelle Alkohole, sogenannte Polyole, oder, weniger bevorzugt, mehrfunktionelle Amine eingesetzt.

In einer bevorzugten Ausführungsform des erfindungsgemäßen Verfahrens werden als Polyurethane kompakte Polyurethane, insbesondere solche mit einer hydrophoben Ausrüstung eingesetzt. Die Hydrophobie kann insbesondere durch Zusatz von hydroxylfunktionellen fettchemischen Komponenten zu mindestens einer der Ausgangskomponenten des Polyurethansystems, bevorzugt zur Polyolkomponente, bewirkt werden.

Es sind eine Reihe von hydroxylfunktionellen fettchemischen Komponenten bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Henkel angeboten.

In einer besonders bevorzugten Ausführungsform des erfindungsgemäßen Verfahrens wird als kompaktes Polyurethan ein solches eingesetzt, das herstellbar ist durch Umsetzung von Polyisocyanaten mit Verbindungen mit mindestens zwei mit Isocyanatgruppen reaktiven Wasserstoffatomen, dadurch gekennzeichnet, dass die Verbindungen mit mindestens zwei reaktiven Wasserstoffatomen mindestens ein fettchemisches Polyol und mindestens ein mit Phenol modifiziertes aromatisches Kohlenwasserstoffharz, insbesondere ein Inden-Cumaron-Harz enthalten. Diese Polyurethane sowie ihre Aufbaukomponenten weisen eine derart hohe Hydrophobie auf, dass sie prinzipiell sogar unter Wasser zu aushärten können.

Als mit Phenol modifizierte aromatisches Kohlenwasserstoffharze mit einer endständigen Phenolgruppe, werden vorzugsweise mit Phenol modifizierte Inden-Cumaron-Harze, besonders bevorzugt technische Gemische von aromatischen Kohlenwasserstoffharzen verwendet, insbesondere solche, die als wesentlichen Bestandteil Verbindungen der allgemeinen Formel (I) 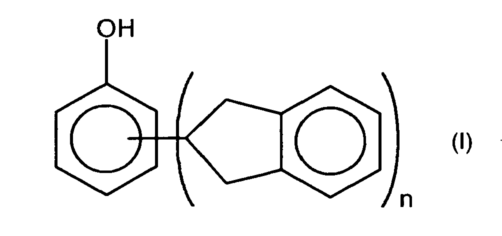 mit n von 2 bis 28 enthalten. Derartige Produkte sind handelsüblich und werden beispielsweise von der Firma Rütgers VFT AG unter dem Handelsnamen NOVARES^{®} angeboten.

Die mit Phenol modifizierten aromatischen Kohlenwasserstoffharze, insbesondere die mit Phenol modifizierten Inden-Cumaron-Harze, weisen zumeist einen OH-Gehalt zwischen 0,5 und 5,0 Gew.-% auf.

Vorzugsweise werden das fettchemische Polyol und das mit Phenol modifizierte aromatische Kohlenwasserstoffharz, insbesondere das Inden-Cumaron-Harz in einem Gewichtsverhältnis von 100 : 1 bis 100 : 50 eingesetzt.

Gemeinsam mit den genannten Verbindungen können weitere Verbindungen mit mindestens zwei aktiven Wasserstoffatomen eingesetzt werden. Auf Grund ihrer hohen Hydrolysebeständigkeit sind Polyetheralkohole bevorzugt. Diese werden nach üblichen und bekannten Verfahren, zumeist durch Anlagerung von Alkylenoxiden an H-funktionelle Startsubstanzen, hergestellt. Die mitverwendeten Polyetheralkohole haben vorzugsweise eine Funktionalität von mindestens 3 und eine Hydroxylzahl von mindestens 400 mgKOH/g, vorzugsweise mindestens 600 mgKOH/g, insbesondere im Bereich von 400 bis 1000 mgKOH/g. Ihre Herstellung erfolgt auf üblichem Wege durch Umsetzung von mindestens dreifunktionellen Startsubstanzen mit Alkylenoxiden. Als Startsubstanzen können vorzugsweise Alkohole mit mindestens drei Hydroxylgruppen im Molekül eingesetzt werden, beispielsweise Glyzerin, Trimethylolpropan, Pentaerythrit, Sorbit, Saccharose. Als Alkylenoxid wird vorzugsweise Propylenoxid eingesetzt.

Der Reaktionsmischung zur Herstellung der Polyurethane können weitere übliche Bestandteile zugesetzt werden, beispielsweise Katalysatoren und übliche Hilfs- und Zusatzstoffe. Insbesondere sollten der Reaktionsmischung Trockenmittel, beispielsweise Zeolithe, zugesetzt werden, um die Anreicherung von Wasser in den Komponenten und damit ein Aufschäumen der Polyurethane zu vermeiden. Der Zusatz dieser Stoffe erfolgt vorzugsweise zu den Verbindungen mit mindestens zwei mit Isocyanatgruppen reaktiven Wasserstoffatomen. Diese Abmischung wird in der Technik häufig als Polyolkomponente bezeichnet. Zur Verbesserung der Langzeitstabilität der Verbundstoffe ist es weiterhin vorteilhaft, Mittel gegen den Angriff von Kleinlebewesen zuzusetzen. Außerdem ist der Zusatz von UV-Stabilisatoren vorteilhaft, um eine Versprödung der Formkörper zu vermeiden.

Die eingesetzten Polyurethane können prinzipiell ohne die Anwesenheit von Katalysatoren hergestellt werden. Zur Verbesserung der Aushärtung können Katalysatoren mitverwendet werden. Als Katalysatoren sollten vorzugsweise solche ausgewählt werden, die eine möglichst lange Reaktionszeit bewirken. Dadurch ist es möglich, dass die Reaktionsmischung lange flüssig bleibt. Prinzipiell ist es, wie beschrieben, möglich, auch ganz ohne Katalysator zu arbeiten.

Die Kombination der Polyisocyanate mit den Verbindungen mit mindestens zwei mit Isocyanatgruppen reaktiven Wasserstoffatomen sollte in einem solchen Verhältnis erfolgen, dass ein stöchiometrischer Überschuss an Isocyanatgruppen, vorzugsweise von mindestens 5 %, insbesondere im Bereich zwischen 5 und 60 % vorliegt.

Die bevorzugt eingesetzten hydrophoben Polyurethane zeichnen sich durch eine besonders gute Verarbeitbarkeit aus. So zeigen diese Polyurethane eine besonders gute Haftung, insbesondere auf feuchten Substraten wie nassem Gestein, insbesondere Granitschotter. Die Aushärtung der Polyurethane erfolgt trotz der Anwesenheit von Wasser praktisch kompakt. Die eingesetzten kompakten Polyurethane zeigen auch bei dünnen Schichten eine vollständig kompakte Aushärtung.

Damit sind die bevorzugt eingesetzten Polyurethane hervorragend zur Verwendung in den erfindungsgemäßen Vorrichtungen zum Schutz von Küsten vor Sturmfluten und Tsumanis geeignet.

Durch die erfindungsgemäßen Vorrichtungen zum Schutz von Küsten vor Sturmfluten und Tsumanis kann auf einfache Weise ein effektiver Schutz von gefährdeten Küstenabschnitten gewährleistet werden.

Da sich im Falle von Seebeben Wellenfronten herausbilden, die unter der Wasseroberfläche verlaufen, werden an die Stabilität der Vorrichtungen zum Küstenschutz hohe Anforderungen gestellt. Die erfindungsgemäßen Vorrichtungen mit dem porösen, hydrophoben Verbundkörper kann diesen Anforderungen wesentlich besser gerecht werden als herkömmliche Küstenschutzvorrichtungen.

## Patentansprüche

1. Vorrichtung zum Küstenschutz , enthaltend mindestens einen an einer Stelle fixierten porösen Verbund aus Steinen und Kunststoffen.

2. Vorrichtung nach Anspruch 1, **dadurch gekennzeichnet, dass** die Fixierung erfolgt, indem der poröse Verbund fest mit einem Bauwerk verbunden wird.

3. Vorrichtung nach Anspruch 2, **dadurch gekennzeichnet, dass** das Bauwerk ein im Grund des Meeres oder der Flussmündung befindliches Fundament ist.

4. Vorrichtung nach Anspruch 2, **dadurch gekennzeichnet, dass** das Bauwerk eine mit Unterbrechungen versehene Konstruktion ist.

5. Vorrichtung nach Anspruch 2, **dadurch gekennzeichnet dass** das Bauwerk aus Beton besteht.

6. Vorrichtung nach Anspruch 1, **dadurch gekennzeichnet, dass** sie sich vollständig unterhalb der Wasseroberfläche befindet.

7. Vorrichtung nach Anspruch 1, **dadurch gekennzeichnet, dass** sie sich teilweise oberhalb der Wasseroberfläche befindet.

8. Vorrichtung nach Anspruch 1, **dadurch gekennzeichnet, dass** der Kunststoff ausgewählt ist aus der Gruppe, enthaltend Polyurethane, Epoxyharze, ungesättigte Polyesterharze, Acrylate und Methacrylate.

9. Vorrichtung nach Anspruch 1, **dadurch gekennzeichnet, dass** der Kunststoff ein Polyurethan ist.

10. Vorrichtung nach Anspruch 1, **dadurch gekennzeichnet, dass** der Kunststoff ein kompaktes Polyurethan ist.

11. Vorrichtung nach Anspruch 1, **dadurch gekennzeichnet, dass** der Kunststoff ein hydrophobes kompaktes Polyurethan ist.

12. Vorrichtung nach Anspruch 1, **dadurch gekennzeichnet, dass** der Kunststoff ein Epoxyharz ist.

13. Verfahren zur Herstellung einer Vorrichtung nach Anspruch 1, umfassend die Schritte
a) Gründung eines Bauwerks auf dem Grund,
b) Aufbringen des einen porösen Verbunds aus Steinen und Kunststoffen auf das Bauwerk, und
c) Fixieren des porösen Verbunds aus Steinen und Kunststoffen auf dem Bauwerk.

14. Verfahren nach Anspruch 13, **dadurch gekennzeichnet, dass** der poröse Verbund aus Steinen und Kunststoffen hergestellt wird, indem man Steine mit den flüssigen Ausgangskomponenten der Kunststoffe in Kontakt bringt und den Kunststoff danach aushärten lässt.

15. Verfahren nach Anspruch 13, **dadurch gekennzeichnet, dass** die Herstellung des porösen Verbunds aus Steinen und Kunststoffen an Land erfolgt und der so erhaltene Formkörper auf das Bauwerk eingebracht und fixiert wird.

16. Verfahren nach Anspruch 13, **dadurch gekennzeichnet, dass** die Fixierung erfolgt, indem auf das Bauwerk und/oder den porösen Verbund aus Steinen und Kunststoffen die flüssigen Ausgangskomponenten eines Kunststoffs aufgebracht und danach der Verbund und das Bauwerk in Kontakt gebracht werden, wo durch das Aushärten des Kunststoffs die feste Verbindung hergestellt wird.

17. Verfahren nach Anspruch 13, **dadurch gekennzeichnet, dass** die Herstellung des porösen Verbunds aus Steinen und Kunststoffen erfolgt, indem man die Steine mit den flüssigen Ausgangskomponenten der Kunststoffe in Kontakt bringt und diese Mischung mit dem Bauwerk in Kontakt bringt, wo der Kunststoff aushärtet.

18. Verfahren nach Anspruch 13, **dadurch gekennzeichnet, dass** die Herstellung des porösen Verbunds aus Steinen und Kunststoffen erfolgt, indem die Steine auf das Bauwerk aufgebracht, darauf die flüssigen Ausgangskomponenten der Kunststoffe gegeben werden und danach die Kunststoffe aushärten.

## Claims

1. An apparatus for coastal protection, comprising at least one porous composite of stones and plastics which is fixed at a point.

2. The apparatus according to claim 1, wherein the fixing is effected by firmly bonding the porous composite to a structure.

3. The apparatus according to claim 2, wherein the structure is a foundation present at the bottom of the sea or of the river mouth.

4. The apparatus according to claim 2, wherein the structure is a construction provided with passages.

5. The apparatus according to claim 2, wherein the structure consists of concrete.

6. The apparatus according to claim 1, which is present completely below the surface of the water.

7. The apparatus according to claim 1, which is present partly above the surface of the water.

8. The apparatus according to claim 1, wherein the plastic is selected from the group consisting of polyurethanes, epoxy resins, unsaturated polyester resins, acrylates and methacrylates.

9. The apparatus according to claim 1, wherein the plastic is a polyurethane.

10. The apparatus according to claim 1, wherein the plastic is a compact polyurethane.

11. The apparatus according to claim 1, wherein the plastic is a hydrophobic compact polyurethane.

12. The apparatus according to claim 1, wherein the plastic is an epoxy resin.

13. A method for the production of an apparatus according to claim 1, comprising the steps
a) laying of a foundation for a structure on the bottom,
b) application of the one porous composite of stones and plastics to the structure, and
c) fixing of the porous composite of stones and plastics on the structure.

14. The method according to claim 13, wherein the porous composite of stones and plastics is produced by bringing stones into contact with the liquid starting components of the plastics and allowing the plastic to cure thereafter.

15. The method according to claim 13, wherein the production of the porous composite of stones and plastics is effected on land and the molding thus obtained is introduced to the structure and fixed.

16. The method according to claim 13, wherein the fixing is effected by applying the liquid starting components of a plastic to the structure and/or the porous composite of stones and plastics and then bringing the composite and the structure into contact, where the strong bond is produced by the curing of the plastic.

17. The method according to claim 13, wherein the production of the porous composite of stones and plastics is effected by bringing the stones into contact with the liquid starting components of the plastics and bringing this mixture into contact with the structure, where the plastic cures.

18. The method according to claim 13, wherein the production of the porous composite of stones and plastics is effected by applying the stones to the structure, then adding the liquid starting components of the plastics and then curing the plastics.

## Revendications

1. Dispositif de protection côtière, contenant au moins un composite poreux à base de pierres et de plastiques fixé à un emplacement.

2. Dispositif selon la revendication 1, **caractérisé en ce que** la fixation a lieu en reliant solidement le composite poreux avec une structure.

3. Dispositif selon la revendication 2, **caractérisé en ce que** la structure est une fondation se trouvant dans le sol de la mer ou de l'embouchure du fleuve.

4. Dispositif selon la revendication 2, **caractérisé en ce que** la structure est une construction munie de discontinuités.

5. Dispositif selon la revendication 2, **caractérisé en ce que** la structure est constituée de béton.

6. Dispositif selon la revendication 1, **caractérisé en ce qu'**il se trouve complètement en dessous de la surface de l'eau.

7. Dispositif selon la revendication 1, **caractérisé en ce qu'**il se trouve partiellement au-dessus de la surface de l'eau.

8. Dispositif selon la revendication 1, **caractérisé en ce que** le plastique est choisi dans le groupe contenant les polyuréthannes, les résines époxy, les résines de polyester insaturées, les acrylates et les méthacrylates.

9. Dispositif selon la revendication 1, **caractérisé en ce que** le plastique est un polyuréthanne.

10. Dispositif selon la revendication 1, **caractérisé en ce que** le plastique est un polyuréthanne compact.

11. Dispositif selon la revendication 1, **caractérisé en ce que** le plastique est un polyuréthanne compact hydrophobe.

12. Dispositif selon la revendication 1, **caractérisé en ce que** le plastique est une résine époxy.

13. Procédé de fabrication d'un dispositif selon la revendication 1, comprenant les étapes :
a) fondation d'une structure sur le sol,
b) application du composite poreux à base de pierres et de plastiques sur la structure et
c) fixation du composite poreux à base de pierres et de plastiques sur la structure.

14. Procédé selon la revendication 13, **caractérisé en ce que** le composite poreux à base de pierres et de plastiques est fabriqué en mettant des pierres en contact avec les composants initiaux liquides des plastiques, puis en laissant durcir le plastique.

15. Procédé selon la revendication 13, **caractérisé en ce que** la fabrication du composite poreux à base de pierres et de plastiques a lieu à terre et le corps moulé ainsi obtenu est appliqué et fixé sur la structure.

16. Procédé selon la revendication 13, **caractérisé en ce que** la fixation a lieu en appliquant les composants initiaux liquides d'un plastique sur la structure et/ou le composite poreux à base de pierres et de plastiques, puis en mettant le composite et la structure en contact, la liaison solide étant formée par le durcissement du plastique.

17. Procédé selon la revendication 13, **caractérisé en ce que** la fabrication du composite poreux à base de pierres et de plastiques a lieu en mettant les pierres en contact avec les composants initiaux liquides des plastique et en mettant ce mélange en contact avec la structure, sur laquelle le plastique durcit.

18. Procédé selon la revendication 13, **caractérisé en ce que** la fabrication du composite poreux à base de pierres et de plastiques a lieu en appliquant les pierres sur la structure, sur laquelle les composants initiaux liquides des plastiques sont placés, puis en durcissant les plastiques.
